# EUROPEAN PATENT SPECIFICATION

(11) **EP 4 497 363 B1**
(45) Date of publication and mention of the grant of the patent: **04.11.2026**
(21) Application number: 23775321.5
(22) Date of filing: 23.03.2023
(51) Int. Cl.: A47L 9/28, A47L 5/24, H02J 7/00, A47L 5/26, A47L 9/24

(54) **VACUUM CLEANER WITH A LIGHTWEIGHT STRUCTURE**
STAUBSAUGER IN LEICHTER AUSFÜHRUNG
ASPIRATEUR AU DESIGN LÉGER

(30) Priority: 23.03.2022 KR 20220036308
(43) Date of publication of application: 29.01.2025
(73) Proprietor: LG Electronics Inc., Yeongdeungpo-gu Seoul 07336 (KR)
(72) Inventor: KIM, Dongseong, Seoul 08592 (KR); PARK, Heegu, Seoul 08592 (KR); KIM, Daewoo, Seoul 08592 (KR); HAN, Jaehun, Seoul 08592 (KR); LIM, Junhyung, Seoul 08592 (KR)
(74) Representative: Ter Meer und Partner mbB
(86) International application number: PCT/KR2023/003855
(87) International publication number: WO 2023/182825

(56) References cited:
- CN-A- 111 820 805
- JP-A- 2020 000 343
- JP-A- 2021 183 053
- JP-U- 3 222 247
- KR-A- 20150 128 425
- KR-A- 20160 039 451
- KR-A- 20190 018 939
- KR-A- 20220 019 990

## Description

### [Technical Field]

The present invention relates to a cleaner, and more specifically, to a cleaner with a lightweight structure by integrating a discharge circuit line of a power supply line connected from a battery to a cleaning nozzle with a charge circuit line for charging the battery.

### [Background Art]

In general, a cleaner is a home appliance for suctioning small trash or dust in a manner of suctioning air using electricity and filling the same in a dust bin inside a product and is commonly called a vacuum cleaner.

The vacuum cleaner may be classified into a manual vacuum cleaner for allowing a user to directly perform cleaning while moving the cleaner, and an automatic vacuum cleaner for performing cleaning while traveling by itself. Depending on the type of the vacuum cleaner, the manual vacuum cleaner may be classified into a canister-type vacuum cleaner, an upright vacuum cleaner, a hand vacuum cleaner, a stick-type vacuum cleaner, etc.

In the past, the canister-type vacuum cleaner was widely used as the household vacuum cleaner, but recently, the hand vacuum cleaner and the stick-type vacuum cleaner, which provide improved convenience of use by providing a dust bin and a cleaner body, are increasingly being used.

The canister-type vacuum cleaner has a main body and a suction port connected by a rubber hose or a pipe and in some cases, may be used by inserting a brush into the suction port.

The hand vacuum cleaner is designed to maximize portability and has lightweight and a short length, and thus can have a limited cleaning area. Therefore, the hand vacuum cleaner is used to clean localized sites, such as on a desk, a sofa, or a vehicle interior.

A user may use the stick-type vacuum cleaner while standing to enable cleaning without bending down. Therefore, it is advantageous for cleaning a wide region while moving. While the hand vacuum cleaner cleans narrow spaces, the stick-type vacuum cleaner may clean wider spaces and clean high places out of reach. Recently, the stick-type vacuum cleaner has been provided in a module type to allow users to actively change a vacuum cleaner type for various purposes.

The provision of the above-described module type may be implemented by connecting different types of cleaning nozzles to a main body of the stick-type vacuum cleaner. The cleaning nozzle may be largely classified into a suction nozzle serving to suction dust from a target cleaning surface and a mop nozzle serving to mop the target cleaning surface. Here, the suction nozzle may be further subdivided into a carpet nozzle, a bedding nozzle, a fluffy nozzle, etc.

For the stick-type vacuum cleaner, lightweight of a product is an important issue. This is because a user should directly grip the stick-type vacuum cleaner and perform a pushing and pulling operation on the target cleaning surface.

As Patent Document, Korean Patent No. 1668520 is presented. Patent Document discloses a vacuum cleaner including a battery for supplying power to a suction motor, a battery management device for detecting a state of the battery, and a controller for controlling an operation of the suction motor. The vacuum cleaner of Patent Document further includes a charger that is detachably connected to a main body of the cleaner and charges the battery.

In this case, in Patent Document, a charge line between the battery and a charger connector is separated from a discharge line between the battery and a suction motor.

According to Patent Document, a path through which the battery is charged and a path through which power is supplied from the battery to the suction motor are configured as separate circuit lines, resulting in structural constraints on the lightweight of the vacuum cleaner.

The main body of the stick-type vacuum cleaner is generally provided with a manipulation part including a power button and one or more input buttons. A suction force of the suction motor installed on the main body may be adjusted by the input button, making it easy to clean the target cleaning surface that requires a large suction force.

CN 111 820 805 A describes a battery-powered vacuum cleaner whose main body and floor head each contain a battery and motor, allowing either motor to draw power from the other battery to extend runtime and increase power.

### [Disclosure]

### [Technical Problem]

The present invention is directed to achieving the lightweight of a cleaner.

In addition, the present invention is directed to saving prices of raw materials of a cleaner.

One or more objects of the invention are solved by the features of the independent claims, preferred embodiments are given in the dependent claims.

### [Technical Solution]

A cleaner according to an embodiment of the present invention for achieving the objects may include a main body in which a manipulation part configured to receive a command from a user and a battery configured to supply power are disposed, a cleaning nozzle connected to the main body and placed on a target cleaning surface, an extension pipe detachably connected to the cleaning nozzle and having one end connected to the cleaning nozzle and the other end connected to the main body, a power supply line whose at least a portion is installed on the extension pipe and which transmits the power supplied from the battery to the cleaning nozzle, and a connection module connected to an external power supply device for charging the battery.

Here, the connection module may be electrically connected to the power supply line and provided so that charge power supplied from the external power supply device is transmitted to the battery through the power supply line.

The power supply line may include a circuit line that is disposed at one point connected to the connection module and branched in two directions with one end facing the cleaning nozzle and the other end facing the main body.

The connection module may be installed on at least one of the cleaning nozzle, the extension pipe, and the main body.

The cleaner according to an embodiment of the present invention may further include a switching part disposed between the battery and the connection module to perform an on/off operation, and a controller configured to control charging or discharging of the battery through the switching part.

In this case, the controller may charge the battery by turning on the switching part when the connection module and the external power supply device are connected.

In addition, the controller may discharge the battery by turning on the switching part when detecting that a user command for driving the cleaning nozzle is input through the manipulation part.

The connection module may include an external terminal connection portion exposed to an outside and electrically connected to the external power supply device, and a power supply line connection portion electrically connected to the power supply line.

In this case, the power supply line connection portion may include a first connection portion and a second connection portion that are electrically closed or opened depending on whether the external power supply device is connected, and a third connection portion connected to a positive electrode terminal side when the external power supply device is connected.

The power supply line may include a circuit line that is disposed at a point connected to the third connection portion and branched in two directions with one end facing the cleaning nozzle and the other end facing the main body.

When the connection module is connected to the external power supply device, the first connection portion and the second connection power may be electrically opened, and the battery may be charged.

In the cleaner according to the embodiment of the present invention, in a state in which the connection module is not connected to the external power supply device, the first connection portion and the second connection portion may be electrically closed, and when a user command for driving the cleaning nozzle is input through the manipulation part in the closed state, the battery may be discharged.

A cleaner according to an embodiment of the present invention for achieving the objects may include a main body in which a manipulation part configured to receive a command from a user and a battery configured to supply power are disposed, a cleaning nozzle connected to the main body and placed on a target cleaning surface, an extension pipe detachably connected to the cleaning nozzle and having one end connected to the cleaning nozzle and the other end connected to the main body, and a power supply line whose at least a portion is installed on the extension pipe and which transmits the power supplied from the battery to the cleaning nozzle, wherein the power supply line may be configured to have a charge current path from the external power supply device to the battery formed thereon when electrically connected to the external power supply device, and have a discharge current path from the battery to the cleaning nozzle formed thereon depending on whether the user command is input from the manipulation part when disconnected to the power supply device.

Here, the cleaner according to the embodiment of the present invention may further include a connection module electrically connecting the external power supply device to the power supply line.

In this case, the power supply line may include a circuit line that is branched in two directions with one end facing the cleaning nozzle and the other end facing the main body.

### [Advantageous Effects]

According to the present invention, there is an advantage that the lightweight of the cleaner can be achieved by integrating the discharge path and the charge path to the power supply line without being structurally distinguished.

In addition, according to the present invention, since the discharge function and the charge function can all be performed on the circuit line of some sections of the power supply line, there is an advantage that the cost can be saved compared to implementing the charge and discharge circuits in separate structures.

The effects of the present invention are not limited to the above-described effects, and other effects that are not described will be able to be clearly understood by those skilled in the art from the above detailed description.

### [Description of Drawings]

FIG. 1 is a perspective view of a cleaner according to an embodiment of the present invention.
FIG. 2 is an exploded perspective view of main components of a cleaning nozzle of FIG. 1.
FIG. 3 is a view schematically showing a structure in which a power supply line is connected in the cleaner according to the embodiment of the present invention.
FIG. 4 is a view showing an embodiment in which a connection module is installed on a cleaning nozzle in FIG. 3.
FIG. 5 is a view showing an embodiment in which the connection module is installed on an extension pipe in FIG. 3.
FIG. 6 is a view showing an embodiment in which the connection module is installed on a main body in FIG. 3.
FIG.7 is a view showing a current flow during discharging of a battery in the embodiment of FIG.4.
FIG.8 is a view showing a current flow during charging of the battery in the embodiment of FIG.4.
FIG.9 is a flowchart showing a driving flow of the cleaner of the embodiment of the invention.

### [Mode for Invention]

Hereinafter, exemplary embodiments of the present invention will be described in detail with reference to the accompanying drawings.

Since the present invention may have various changes and various embodiments, specific embodiments are shown in the accompanying drawings and specifically described in the detail descriptions. This is not intended to limit the present invention to specific embodiments and should be construed to include all modifications, equivalents, and substitutes included in the spirit and technical scope of the present invention.

The terms used in the present application are only used to describe specific embodiments and are not intended to limit the present invention. The singular expression includes the plural expression unless the context clearly dictates otherwise.

Unless defined otherwise, all terms used herein, including technical or scientific terms, have the same meaning as commonly understood by those skilled in the art to which the present invention pertains. The terms defined in a generally used dictionary can be construed as meanings that match with the meanings of the terms from the context of the related technology and are not construed as an ideal or excessively formal meaning unless clearly defined in the present application.

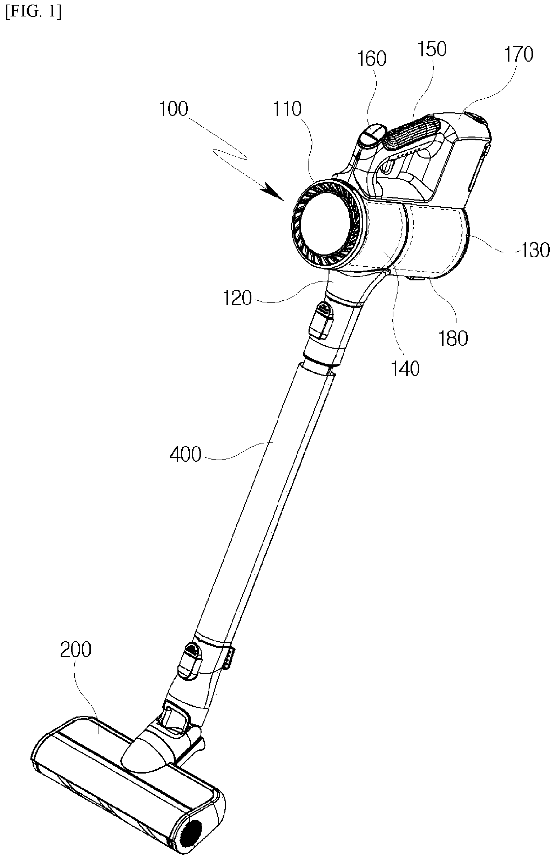

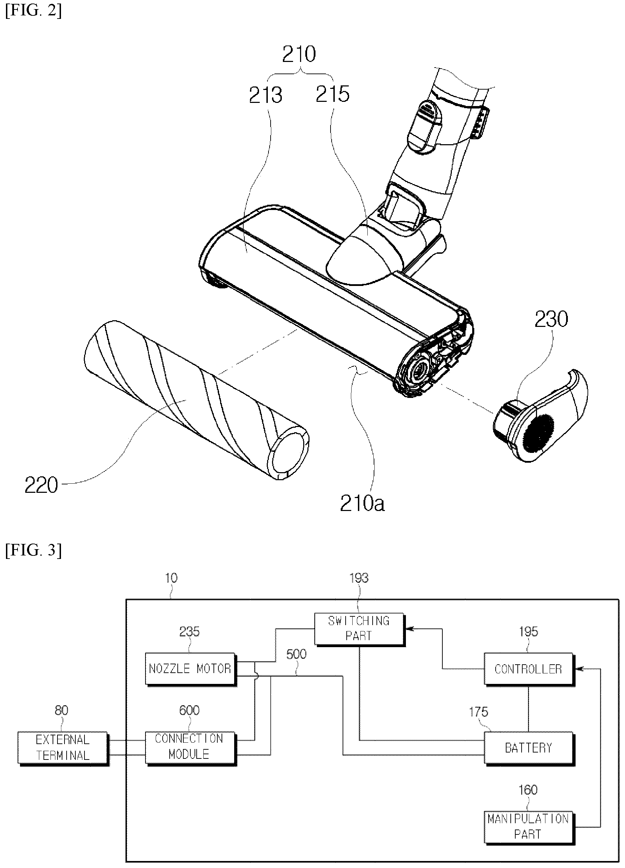

First, a mechanical structure of a cleaner according to an embodiment of the present invention will be described with reference to FIGS. 1 and 2.

FIG. 1 is a perspective view of a cleaner according to an embodiment of the present invention, and FIG. 2 is an exploded perspective view of main components of a cleaning nozzle of FIG. 1.

Referring to FIGS. 1 and 2, a cleaner 10 may include a main body 100, a cleaning nozzle 200, and an extension pipe 400.

Hereinafter, first, the main body 100 of the cleaner 10 will be described.

The main body 100 may include a main body housing 110, a suction part 120, a dust separation part 130, a suction motor 140, a handle 150, and a manipulation part 160.

The main body housing 110 may form an exterior of the main body 100. The main body housing 110 may provide a space in which the suction motor 140 and a filter (not shown) may be accommodated. The main body housing 110 may be configured in a shape similar to a cylinder.

The suction part 120 may protrude outward from the main body housing 110. As an example, the suction part 120 may be formed in a cylindrical shape with an open interior. The suction part 120 may be coupled to the extension pipe 400 or the cleaning nozzle 200. The suction part 120 may provide a flow path through which air including dust may flow (hereinafter referred to as "suction flow path").

The dust separation part 130 may communicate with the suction part 120. The dust separation part 130 may separate dust suctioned therein through the suction part 120. A space inside the dust separation part 130 may communicate with a space inside a dust bin 180.

For example, the dust separation part 130 may be provided with two or more cyclone parts capable of separating dust by a cyclonic flow. In addition, the space inside the dust separation part 130 may communicate with the suction flow path. Therefore, the air and dust suctioned through the suction part 120 spirally flow along an inner circumferential surface of the dust separation part 130. Therefore, a cyclonic flow may occur in the space inside the dust separation part 130.

The dust separation part 130 is a component that communicates with the suction part 120 and adopts the principle of a dust collector using a centrifugal force to separate dust suctioned into the main body 100 through the suction part 120.

As an example, the dust separation part 130 may include at least one cyclones capable of separating dust by the cyclonic flow. The cyclone may communicate with the suction part 120. The air and dust suctioned through the suction part 120 spirally flow along an inner circumferential surface of the cyclone.

The dust separation part 130 may further include a secondary cyclone that re-separates dust from the air discharged from the cyclone. In this case, the secondary cyclone may be located inside the cyclone to minimize a size of the dust separation part 130. The secondary cyclone may include a plurality of cyclone bodies disposed in parallel. The air discharged from the cyclone may be partitioned into the plurality of cyclone bodies and may pass through the same.

The dust separation part 130 may further include a cyclone filter (not shown) disposed to surround the secondary cyclone part. The cyclone filter may include a mesh portion made of a metal material having a plurality of holes to filter dust in a process in which air passes therethrough.

The suction motor 140 may generate a suction force of suctioning air including dust. The suction motor 140 may be accommodated in the main body housing 110. The suction motor 140 may allow the air to flow into the dust bin 180 by generating the suction force by rotation. As an example, the suction motor 140 may be provided in a shape similar to a cylindrical shape.

The handle 150 may be gripped by a user. The handle 150 may be disposed behind the suction motor 140. As an example, the handle 150 may be formed in a shape similar to a cylindrical shape. Alternatively, the handle 150 may be formed in a curved cylindrical shape. The handle 150 may be disposed at a predetermined angle with the main body housing 110, the suction motor 140, or the dust separation part 130.

The manipulation part 160 may be disposed on the handle 150. The manipulation part 160 may be disposed on an inclined surface formed in an upper region of the handle 150. The user may input an operation or stop command of the cleaner 10 through the manipulation part 160.

The manipulation part 160 may include a power button and one or more input buttons. The power button may be related to the initial driving of the suction nozzle 200. When the user presses the power button, a nozzle motor 235 disposed in the suction nozzle 200 may start to drive. The input button may be related to the control of an increase or decrease in the suction force of the suction motor 140 when the suction nozzle 200 is connected to the main body 100.

The main body 100 may include the dust bin 180. The dust bin 180 may communicate with the dust separation part 130. The dust bin 180 may store the dust separated from the dust separation part 130.

A discharge cover may be provided on a lower surface of the dust bin 180 to open and close one end portion of the dust bin 180 in a longitudinal direction. Specifically, the discharge cover may be rotatably coupled to an open one side of the dust bin 180 to selectively open and close a lower portion of the dust bin 180.

The main body 100 may include a battery housing 170. A battery 175 may be accommodated in the battery housing 170. The battery housing 170 may be disposed under the handle 150. As an example, the battery housing 170 may have a hexahedral shape with an open lower portion. A rear surface of the battery housing 170 may be connected to the handle 150.

The battery housing 170 may include an accommodation portion that is opened downward. The battery 175 may be detachably attached through the accommodation portion of the battery housing 170.

Meanwhile, the main body 100 may include the battery 175. The battery 175 may be detachably coupled to the main body 100. The battery 175 may be detachably coupled to the battery housing 170. As an example, the battery 175 may be inserted into the battery housing 170 from the bottom of the battery housing 170.

The battery 175 is a component for supplying power. As an example, the battery 175 may supply power to the suction motor 140. As an example, the battery 175 may supply power to the cleaning nozzle 200. The battery 175 may be disposed under the handle 150. The battery 175 may be disposed behind the dust bin 180.

Hereinafter, the extension pipe 400 will be described. The cleaning nozzle 200 will be described in detail after the extension pipe 400 is described.

The cleaner may include the extension pipe 400. The extension pipe 400 may communicate with the cleaning nozzle 200. The extension pipe 400 may communicate with the main body 100. The extension pipe 400 may communicate with the suction part 120 of the main body 100. The extension pipe 400 may be formed in a long cylindrical shape.

The main body 100 may be detachably connected to the extension pipe 400. The main body 100 may be connected to the cleaning nozzle 200 through the extension pipe 400.

In an embodiment in which the cleaning nozzle 200 connected to the main body 100 is a suction nozzle, the main body 100 may generate a suction force through the suction motor 140 and provide the suction force to the cleaning nozzle 200 through the extension pipe 400. In this case, external dust may flow into the main body 100 through the cleaning nozzle 200 and the extension pipe 400.

The cleaning nozzle 200 may be detachably connected to the extension pipe 400.

That is, when the cleaning nozzle 200, the extension pipe 400, and the main body 100 are all connected, one end of the extension pipe 400 may be connected to the cleaning nozzle 200, and the other end of the extension pipe 400 may be connected to the main body 100.

Hereinafter, a possible embodiment of the cleaning nozzle 200 provided to be connected to the main body 100 will be described.

The cleaning nozzle connected to the main body 100 may be the suction nozzle 200.

The suction nozzle 200 described as an example in the embodiment of the present invention may be a cleaning nozzle having a function of suctioning dust from the target cleaning surface using the suction force of the suction motor 140 provided in the main body 100. To this end, the cleaning nozzle may be placed on the target cleaning surface. In this case, the cleaning nozzle may be placed on the target cleaning surface so that a front opening 210a to be described below faces the target cleaning surface.

Here, dust is a concept that encompasses all foreign substances attached to the target cleaning surface, such as hair, lint, fine powder, plastic pieces, and small insect corpses, and may include everything from invisible fine dust to visible dust with a certain degree of weight. That is, dust may refer to all substances that may be suctioned into the dust bin 180 of the main body 100 by the suction force of the suction motor 140.

The suction nozzle 200 may be detachably connected to the main body 100. The suction nozzle 200 may be directly connected to the main body 100 or indirectly connected to the main body 100 through the extension pipe 400.

Referring to FIG. 2, the suction nozzle 200 may include a nozzle body 210, a rotational cleaning part 220, and a nozzle driving part 230.

The nozzle body 210 may include an accommodation body 213 that forms an exterior of the suction nozzle 200 and accommodates the rotational cleaning part 220 and the nozzle driving part 230 therein, and a connection pipe 215 connected to the main body 100 or the extension pipe 400.

The front opening 210a for suctioning air including contaminants may be formed in the nozzle body 210.

In this case, air may be introduced through the front opening 210a by the suction force generated from the suction motor 140 of the main body 100. The introduced air may move to the connection pipe 215 through the rotational cleaning part 220, and after the dust is separated from the dust bin 180 of the main body 100, may be discharged to the outside of the cleaner 10.

The rotational cleaning part 220 may be accommodated in the accommodation body 213 and may suction air by rotation and send the same to the suction part 120.

The nozzle driving part 230 is a component for rotating the rotational cleaning part 220 and may be inserted into one side of the rotational cleaning part 220 to transmit power to the rotational cleaning part 220. However, it is only an example of transmitting power, and the nozzle driving part 230 may not be inserted into one side of the rotational cleaning part 220 but may be located in a separate space in a direction of the connection pipe 215 and located parallel to a front and back of the rotational cleaning part 220.

The nozzle driving part 230 may include the nozzle motor 235 for generating a driving force (see FIG. 3).

The nozzle driving part 230 may further include a power transmission part (not shown) for transmitting the power of the nozzle motor 235 to the rotational cleaning part 220. As an example of the power transmission part, a gear may be provided, but any structure capable of transmitting power may be used. For example, the power transmission part may include a pulley and a belt connecting the same.

The power transmission part appropriately reduces revolutions-per-minute (RPM) of the nozzle motor 235 using a gear ratio or a difference in radius of the pulley and transmits the reduced RPM to the rotational cleaning part 220. That is, a reduction gear ratio of the nozzle motor 235 is determined according to the ratio of the gear provided in the power transmission part, and thus the RPM of the rotational cleaning part 220 is determined. This is intended to transmit a different optimized RPM and rotational torque depending on the target cleaning surface.

For example, in the case of a general-purpose fluffy nozzle and a carpet nozzle for carpet cleaning, the nozzle motor 235 with the same type and size is used, but since a reduction gear ratio of the carpet nozzle is smaller than that of the fluffy nozzle, the RPM of the rotational cleaning part 220 may be large. This ultimately means that a current required for driving is large.

The rotational cleaning part 220 is rotated by the driving force transmitted through the nozzle driving part 230 to rub against the target cleaning surface, thereby removing contaminants. In addition, an outer circumferential surface of the rotational cleaning part 220 may be made of a fabric such as vellum or felt material. Therefore, a foreign substance such as dust accumulated on the target cleaning surface during the rotation of the rotational cleaning part 220 can be effectively removed by being attached to the outer circumferential surface of the rotational cleaning part 220.

As described above, since the suction nozzle 200 has different characteristics depending on the above-described reduction gear ratio, it is possible to implement various types of suction nozzles 200 that may be used for different purposes.

For example, the suction nozzle 200 including the power transmission part for providing an appropriate reduction gear ratio to a nozzle motor having a high RPM may be used as a carpet nozzle by having a relatively low reduction gear ratio, for example, 3.3:1. In addition, the suction nozzle 200 may be used as a general-purpose fluffy nozzle by having a relatively high reduction gear ratio, for example, 13.5: 1. The suction nozzle 200 that has a small RPM of the nozzle motor 235 and a small reaction force received through the target cleaning surface may be used as a bedding nozzle.

Hereinafter, a cleaner in which a battery discharge path connected from the battery 175 to the nozzle motor 235 and a battery charge path connected from an external power supply device 80 to the battery 175 are integrated will now be described with reference to FIGS. 3 and subsequent drawings.

FIG. 3 is a view schematically showing a structure in which a power supply line is connected in the cleaner according to the embodiment of the present invention.

Referring to FIG. 3, the cleaner 10 according to the embodiment of the present invention further includes a power supply line 500.

The power supply line 500 is a circuit line connecting the battery 175 to the cleaning nozzle 200.

At least a portion of the power supply line 500 may be installed on the extension pipe 400 of the cleaner 10. At least a portion of the power supply line 500 may be installed on the cleaning nozzle 200. At least a portion of the power supply line 500 may be installed on the main body 100 of the cleaner 10.

The power supply line 500 may extend through connection between connectors at a connection point where the extension pipe 400 and the cleaning nozzle 200 are coupled. The power supply line 500 may extend through the connection between the connectors at a connection point where the extension pipe 400 and the main body nozzle 100 are coupled. As is well known, the above-described connectors may be configured in a male-female form for electrical connection in a relationship where the connectors are coupled. Therefore, the power supply line 500 may transmit power supplied by the battery 175 to the cleaning nozzle 200.

Continuously referring to FIG. 3, the cleaner 10 according to the embodiment of the present invention may further include a connection module 600.

The connection module 600 may be electrically connected to the power supply device 80 that is present outside the cleaner 10.

Here, the power supply device 80 may be, for example, an outlet. As another example, the power supply device 80 may be a charging stand that is connected to an outlet to perform a function of charging the cleaner and a function of holding the cleaner at the same time. As still another example, the power supply device 80 may be a cleaner station that is connected to an outlet to perform a function of charging the cleaner, a function of holding the cleaner, and a function of automatically suctioning dust inside a dust bin of the cleaner. The type of the external power supply device 80 is not limited to the above examples, and any device that may supply power to an electric device and is present outside the cleaner may be included in the external power supply device 80 disclosed in the present invention.

The connection module 600 may have one side electrically connected to the external power supply device 80 as described above and the other side electrically connected to the power supply line 500 inside the cleaner.

To this end, at least a portion of the structure of the connection module 600 may be exposed to the outside of the cleaner, and the other portion may be inserted into the cleaner. Alternatively, the entire connection module 600 may be inserted into the cleaner, but the external power supply device 80 may include a male connector, and the corresponding component of the connection module 600 connected to the male connector may be implemented as a female connector. The arrangement and connector shape of the connection module 600 are not limited to the above examples, and any connection that may electrically connect the external power supply device 80 to the power supply line 500 without departing from the spirit of the embodiment of the present invention may be included in the connection module 600 disclosed in the present invention.

That is, the connection module 600 is a component that is provided so that charging power supplied from the external power supply device 80 is transmitted to the battery 175 included in the main body 100 of the cleaner through the power supply line 500. That is, the connection module 600 may electrically connect the external power supply device 80 to the power supply line 500.

The connection module 600 may be installed on one component that is selected from the cleaning nozzle 200, the extension pipe 400, and the main body 100. From another perspective, the connection module 600 may be disposed on one component that is selected from the cleaning nozzle 200, the extension pipe 400, and the main body 100.

A plurality of connection modules 600 may be provided and installed on at least two components among the cleaning nozzle 200, the extension pipe 400, and the main body 100. From another perspective, the connection module 600 may be installed on at least two components among the cleaning nozzle 200, the extension pipe 400, and the main body 100.

A plurality of connection modules 600 may be provided and installed on all of the cleaning nozzle 200, the extension pipe 400, and the main body 100. From another perspective, the connection module 600 may be disposed on all of the cleaning nozzle 200, the extension pipe 400, and the main body 100.

When the connection module 600 is installed on the extension pipe 400, the battery 175 may be charged even in a state in which only the extension pipe 400 and the main body 100 have been coupled. Therefore, there is an advantage in that the cleaning nozzle 200 can be separated while charging the battery 175 to enable hygiene management.

When the connection module 600 is installed on the main body 100, the battery 175 may be charged even in a state in which the main body 100 has been separated from the cleaning nozzle 200 and the extension pipe 400. Therefore, there is an advantage in that the cleaning nozzle 200 and the extension pipe 400 can be separated while charging the battery 175 for hygiene management, and there is an advantage in that the battery 175 can be charged even when a space connected to the external power supply device 80 is narrow.

Continuously referring to FIG. 3, the cleaner according to the embodiment of the present invention may further include a switching part 193 and a controller 195.

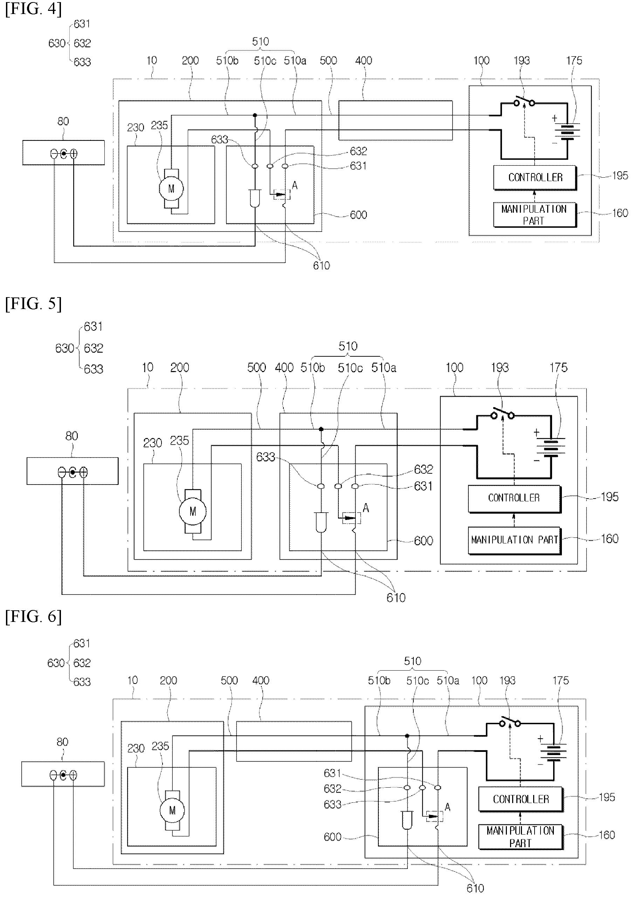

The switching part 193 is a component that is disposed between the battery 175 and the connection module 600 to perform an on/off operation. From another perspective, the switching part 193 is a component that is disposed between the battery 175 and the cleaning nozzle 200 to perform the on/off operation. As an example, the switching part 193 may be connected to a positive electrode terminal of the battery 175 (see FIG. 4). When the switching part 193 is turned on, the battery 175 and the connection module 600 may be electrically connected. When the switching part 193 is turned off, the battery 175 and the connection module 600 may be electrically disconnected. When the switching part 193 is turned on, the battery 175 and the cleaning nozzle 200 may be electrically connected. When the switching part 193 is turned off, the battery 175 and the cleaning nozzle 200 may be electrically disconnected.

The controller 195 is a component that controls the charging or discharging of the battery 175 through the switching part 193.

The controller 195 may charge the battery 175 by turning on the switching part 193 when the connection module 600 and the external power supply device 80 are connected.

When the controller 195 detects that a user command for driving the cleaning nozzle 200 is input through the manipulation part 160 of the main body 100, the controller 195 may discharge the battery 175 by turning on the switching part 193.

That is, a basic state of the switching part 193 is off, but the switching part 193 may be turned on through the control of the controller 195 depending on whether predetermined conditions are satisfied.

Meanwhile, here, the controller 195 may include all types of devices capable of processing data, such as a processor. Here, "processor" may be, for example, a data processing device built into hardware, which has a physically structured circuit to perform a function expressed by code or commands included in a program.

The controller 195 may be mounted on a printed circuit board (PCB) (not shown) installed on the main body 100. In addition to the on/off control of the switching part 193, the controller 195 may perform control related to the overall driving of the cleaner. For example, the controller 195 may perform operation control of the suction motor 140.

The controller 195 may detect a current flow and determine whether the connection module 600 and the external power supply device 80 have been connected. The current flow may be detected by a measurement part (not shown). The controller 195 may determine whether the external power supply device 80 has been connected to the connection module 600 by a signal transmitted from the measurement part. The measurement part may be disposed on a circuit line through which a current to be measured flows.

More specifically, when the external power supply device 80 is connected to the connection module 600, a plus (+) terminal (third connection portion 633 to be described below) of the connection module 600 is electrically connected to the power supply line 500. With this connection, a current higher than or equal to a set current flows to the measurement part. When the current higher than or equal to the set current flows to the measurement part, a signal is transmitted to the controller 195, and the controller 195 recognizes that the external power supply device 80 and the connection module 600 have been connected by the signal received from the measurement part, that is, the external power supply device 80 has been electrically connected to the power supply line 500. Therefore, the controller 195 may turn on the switching part 193, and the battery 175 may be charged.

In contrast, when the external power supply device 80 is not connected to the connection module 600, the plus (+) terminal of the connection module 600 is not electrically connected to the power supply line 500. In this state, a current (theoretically a current of zero (0) ampere) smaller than the set current flows to the measurement part. When the current smaller than the set current flows to the measurement part, a signal is not transmitted to the controller 195 and the controller 195 does not control the switching part 193, and thus the switching part 193 maintains the off operation.

The controller 195 may receive a signal transmitted from the manipulation part 160 and determine whether a user command for driving the cleaning nozzle 200 is input.

More specifically, when the user presses the power button of the manipulation part 160, the signal is transmitted from the manipulation part 160 to the controller 195, and the controller 195 recognizes that the user intends to drive the cleaning nozzle 200 by the signal received from the manipulation part 160. Therefore, the controller 195 may turn on the switching part 193, and the battery 175 may be discharged.

Hereinafter, an electrical connection structure according to the embodiment of the present invention will be described in detail with reference to FIGS. 4 to 6.

FIG. 4 is a view showing an embodiment in which a connection module is installed on a cleaning nozzle in FIG. 3, FIG. 5 is a view showing an embodiment in which the connection module is installed on an extension pipe in FIG. 3, and FIG. 6 is a view showing an embodiment in which the connection module is installed on a main body in FIG. 3.

Since FIGS. 4 to 6 differ only in a location at which the connection module 600 is installed, here, FIG. 4 is described as a representative example.

Referring to FIG. 4, the power supply line 500 may include a circuit line branched in a Y shape. A Y circuit line 510 of the power supply line 500 may be disposed at one point where the connection module 600 and the power supply line 500 are connected. The Y circuit line 510 may be connected to the third connection portion 633 of the connection module 600, which will be described below. That is, the Y circuit line 510 may be formed by branching the circuit line extending from the connection module 600 in two directions and branched in two directions with a branched one end facing the cleaning nozzle 200 and the other end facing the main body 100.

More specifically, the Y circuit line 510 may include a first branch line 510a, a second branch line 510b, and a third branch line 510c. The first branch line 510a is connected to the battery 175. The second branch line 510b is connected to the cleaning nozzle 200. The third branch line S 10c is connected to the connection module 600 between the first branch line 510a and the second branch line 510b.

When the external power supply device 80 and the connection module 600 are connected, a current flows through the third branch line 510c. In this state, when the switching part 193 is turned on, power supplied to the third branch line 510c may charge the battery 175 through the first branch line 510a.

When the external power supply device 80 and the connection module 600 are disconnected, a current does not flow through the third branch line 510c. In this state, when the switching part 193 is turned on, power is supplied from the battery 175 to the cleaning nozzle 200 through the first branch line 510a and the second branch line 510b, and the battery 175 may be discharged.

That is, the first branch line 510a becomes a circuit line used for both charging and discharging the battery 175.

From another perspective, the first branch line 510a is used to overlap the charge path and the discharge path of the battery 175.

From still another perspective, at least some circuit lines of the power supply line 500 may serve as both the charge current path of the battery 175 and the discharge current path of the battery 175.

From yet another perspective, the discharge circuit line of the power supply line 500 connected from the battery 175 to the cleaning nozzle 200 is integrated with the charge circuit line for charging of the battery 175.

From yet another perspective, at least some circuit lines of the power supply line 500 form a current flow along the charge current path through which the battery 175 is charged under a first condition, and a current flow along the discharge current path through which the battery 175 is discharged under a second condition. Here, the charge current path is a current path from the external power supply device 80 to the battery 175. Here, the discharge current path is a current path from the battery 175 to the cleaning nozzle 200. In this case, the first condition includes an input of a user command through the manipulation part 160 performed for driving the cleaning nozzle 200 in a state in which the external power supply device 80 has been disconnected to the connection module 600. In this case, the second condition includes the external power supply device 80 electrically connected to the connection module 600.

From another perspective, at least some circuit lines of the power supply line 500 may be configured to have different current flow directions depending on whether the first condition and the second condition are satisfied. In this case, the first condition includes an input of a user command through the manipulation part 160 performed for driving the cleaning nozzle 200 in a state in which the external power supply device 80 has been disconnected to the connection module 600. In this case, the second condition includes the external power supply device 80 electrically connected to the connection module 600.

With this configuration, there is an advantage that the lightweight of the cleaner can be achieved.

Continuously referring to FIG. 4, the connection module 600 may include an external terminal connection portion 610 that is exposed to the outside and electrically connected to the external power supply device 80, and a power supply line connection portion 630 that is electrically connected to the power supply line 500.

In this case, the power supply line connection portion 630 may include a first connection portion 631, a second connection portion 632, and a third connection portion 633. In this case, each connection portion may be a terminal for electrical connection. That is, the power supply line connection portion 630 may be composed of 3 pins.

The first connection portion 631 and the second connection portion 632 of the power supply line connection portion 630 may be electrically closed or opened depending on whether the external power supply device 80 is connected. The third connection portion 633 is a terminal connected to a positive electrode terminal side of the external power supply device 80 when the external power supply device 80 is connected.

More specifically, in a state in which the connection module 600 is not connected to the external power supply device 80, that is, a state in which the external power supply device 80 is not connected to the external terminal connection portion 610, the first connection portion 631 and the second connection portion 632 may be electrically closed. In this case, the first connection portion 631 and the second connection portion 632 may be connected to a negative electrode terminal of the battery 175. At the same time, the first connection portion 631 and the second connection portion 632 may be connected to the ground.

However, even in this case, in a state in which the switching part 193 is turned off, power is not supplied to the cleaning nozzle 200. Only when the user command for driving the cleaning nozzle 200 is input through the manipulation part 160 in a state in which the first connection portion 631 and the second connection portion 632 are closed and the switching part 193 is turned on, power may be supplied from the battery 175 to the cleaning nozzle 200. That is, the battery 175 may be discharged.

In a state in which the connection module 600 has been connected to the external power supply device 80, that is, a state in which the external power supply device 80 has been connected to the external terminal connection portion 610, the first connection portion 631 and the second connection portion 632 may be electrically opened. In this case, the first connection portion 631 may be connected to a negative electrode terminal of the external power supply device 80. At the same time, the first connection portion 631 may be connected to the negative electrode terminal of the battery 175. At the same time, the third connection portion 633 may be connected to the positive electrode terminal of the external power supply device 80.

When the first connection portion 631 and the second connection portion 632 are opened, eventually, the external power supply device 80 has the negative electrode terminal connected to the first connection portion 631 and the positive electrode terminal connected to the third connection portion 633. Therefore, the battery 175 may be charged by the power supplied from the external power supply device 80. In this case, as described above, the controller 195 may detect a state in which the external power supply device 80 has been connected to the power supply line 500 and turn on the switching part 193.

The first connection portion 631 and the second connection portion 632 may be electrically closed and opened by a mechanical switch (not shown) built into the connection module 600. Since a structure that normally has connected contacts but a cut one-sided wire according to the insertion of a plug is a structure commonly used in a DC jack, detailed description thereof will be omitted here.

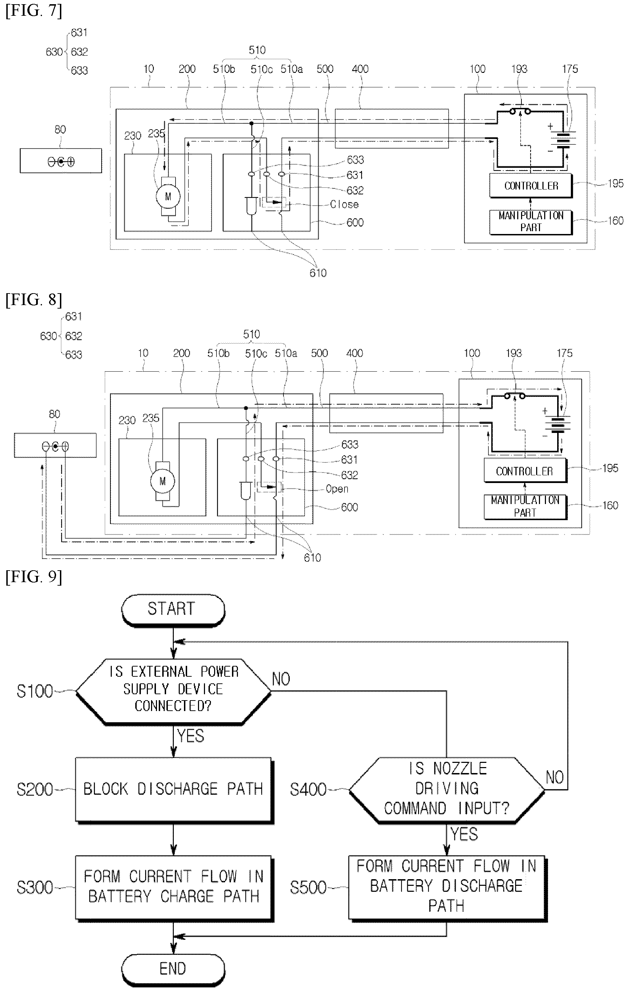

FIG. 7 is a view showing a current flow during discharging of a battery in the embodiment of FIG. 4, and FIG. 8 is a view showing a current flow during charging of the battery in the embodiment of FIG. 4.

A current flow will be described with reference to FIGS. 7 and 8 as follows.

First, referring to FIG. 7, in a state in which the external power supply device 80 is not connected to the cleaner and is disconnected, the first connection portion 631 and the second connection portion 632 of the connection module 600 are electrically closed and perform the same function as the conventional power supply line 500. Since the third branch line 510c connected to the third connection portion 633 has an open one side, no current flows.

Next, referring to FIG. 8, in a state in which the external power supply device 80 has been connected to the cleaner, the first connection portion 631 and the second connection portion 632 of the connection module 600 are electrically opened, and the discharge path of the power supply line 500 connected from the battery 175 to the cleaning nozzle 200 is blocked, and the charge path of the battery 175 is formed. The third connection portion 633 has one side connected to the positive electrode terminal of the external power supply device 80 and the other side connected to the third branch line 510c so that a current flows. That is, the battery 175 is charged by forming a closed circuit between the external power supply device 80 and the battery 175.

FIG. 9 is a flowchart showing a driving flow of the cleaner according to the embodiment of the present invention.

The driving flow of the cleaner according to the embodiment of the present invention will be described with reference to FIG. 9 as follows.

First, it is determined whether the external power supply device 80 has been connected to the power supply line 500 (S100). The above determination may be performed by the controller 195.

When the external power supply device 80 is connected to the power supply line 500, the discharge path of the power supply line 500 is blocked (S200). The above blocking is structurally performed as a contact point between the first connection portion 631 and the second connection portion 632 of the connection module 600 is released and the first connection portion 631 and the second connection portion 632 are electrically opened.

In this case, the current flow of the charge path through which the battery 175 is charged is formed (S300). The operation (S300) includes turning on the switching part 193 by the controller 195.

When the external power supply device 80 and the power supply line 500 are disconnected, the first connection portion 631 and the second connection portion 632 of the connection module 600 are electrically closed. In this case, in a state in which the switching part 193 has been turned off, power is not supplied to the cleaning nozzle 200.

When a nozzle driving command is input from the user in a state in which the first connection portion 631 and the second connection portion 632 have been electrically closed (S400), the current flow in the discharge path through which the battery 175 is discharged is formed (S500). Here, the nozzle driving command means a user input of pressing the power button of the manipulation part 160. Here, the controller 195 may perform the determination on whether the nozzle driving command is input. The operation (S500) includes turning on the switching part 193 by the controller 195.

A more detailed description of the driving flow of the cleaner described with reference to FIG. 9 may be replaced with the contents described above with reference to FIGS. 3 to 8.

As described above, according to the present invention, there is an advantage that the lightweight of the cleaner can be achieved by integrating the discharge path and the charge path to the power supply line without being structurally distinguished.

In addition, according to the present invention, since the discharge function and the charge function can all be performed on the circuit line of some sections of the power supply line, there is an advantage that the cost can be saved compared to implementing the charge and discharge circuits in separate structures.

## Claims

1. A cleaner (10) comprising:
a main body (100) in which a manipulation part (160) configured to receive a command from a user and a battery (175) configured to supply power are disposed;
a cleaning nozzle (200) connected to the main body (100) and placed on a target cleaning surface;
an extension pipe (400) detachably connected to the cleaning nozzle (200) and having one end connected to the cleaning nozzle (200) and the other end connected to the main body (100);
a power supply line (500), wherein at least a portion of said power supply line (500) is installed on the extension pipe (400) the power supply line (500) being configured to transmit the power supplied from the battery (175) to the cleaning nozzle (200); and
a connection module (600) connected to an external power supply device (80) for charging the battery (175),
wherein the connection module (600) is electrically connected to the power supply line (500) and provided so that charge power supplied from the external power supply device (80) is transmitted to the battery (175) through the power supply line (500),
**characterized in that**
the power supply line (500) includes a circuit line (510) branched in a Y shape having a first branch line (510a) connected to the battery (175) and used for both charging and discharging the battery (175), a second branch line (510b) connected to the cleaning nozzle (200) and a third branch line (510c) connected to the connection module (600).

2. The cleaner (10) of claim 1, wherein the branched circuit line (510) is disposed at one point connected to the connection module (600) and branched in two directions with one end facing the cleaning nozzle (200) and the other end facing the main body (100).

3. The cleaner (10) of claim 1, wherein the connection module (600) is installed on at least one of the cleaning nozzle (200), the extension pipe (400), and the main body (100).

4. The cleaner (10) of claim 1, further comprising:
a switching part (193) disposed between the battery (175) and the connection module (600) to perform an on/off operation; and
a controller (195) configured to control charging or discharging of the battery (175) through the switching part (193).

5. The cleaner (10) of claim 4, wherein the controller (195) charges the battery (175) by turning on the switching part (193) when the connection module (600) and the external power supply device (80) are connected.

6. The cleaner (10) of claim 4, wherein the controller (195) discharges the battery (175) by turning on the switching part (193) when detecting that a user command for driving the cleaning nozzle (200) is input through the manipulation part (160).

7. The cleaner (10) of claim 1, wherein the connection module (600) includes:
an external terminal connection portion (610) exposed to an outside and electrically connected to the external power supply device (80); and
a power supply line connection portion (630) electrically connected to the power supply line (500), and
the power supply line connection portion (630) includes:
a first connection portion (631) and a second connection portion (632) that are electrically closed or opened depending on whether the external power supply device (80) is connected; and
a third connection portion (633) connected to a positive electrode terminal side when the external power supply device (80) is connected.

8. The cleaner (10) of claim 7, wherein the branched circuit line (510) is disposed at a point connected to the third connection portion (633) and branched in two directions with one end facing the cleaning nozzle (200) and the other end facing the main body (100).

9. The cleaner (10) of claim 7, wherein, when the connection module (600) is connected to the external power supply device (80), the first connection portion (631) and the second connection portion (632) are electrically opened, and the battery (175) is charged.

10. The cleaner (10) of claim 7, wherein in a state in which the connection module (600) is not connected to the external power supply device (80), the first connection portion (631) and the second connection portion (632) are electrically closed, and when a user command for driving the cleaning nozzle (200) is input through the manipulation part (160) in the closed state, the battery (175) is discharged.

11. The cleaner (10) of claim 1,
wherein the power supply line (500) is configured to:
have a charge current path from the external power supply device (80) to the battery (175) formed thereon when electrically connected to the external power supply device (80); and
have a discharge current path from the battery (175) to the cleaning nozzle (200) formed thereon depending on whether the user command is input from the manipulation part (160) when disconnected to the external power supply device (80).

## Patentansprüche

1. Reinigungsvorrichtung (10), die Folgendes umfasst:
einen Hauptkörper (100), in dem eine Bedienungskomponente (160), die konfiguriert ist, einen Befehl von einem Benutzer zu empfangen, und eine Batterie (175), die konfiguriert ist, Energie zuzuführen, angeordnet sind,
eine Reinigungsdüse (200), die mit dem Hauptkörper (100) verbunden ist und auf einer Zielreinigungsfläche angeordnet wird;
ein Verlängerungsrohr (400), das auf abnehmbare Weise mit der Reinigungsdüse (200) verbunden ist und ein Ende, das mit der Reinigungsdüse (200) verbunden ist, und das andere Ende, das mit dem Hauptkörper (100) verbunden ist, aufweist;
eine Stromversorgungsleitung (500), wobei zumindest ein Abschnitt der Stromversorgungsleitung (500) an dem Verlängerungsrohr (400) installiert ist, wobei die Stromversorgungsleitung (500) konfiguriert ist, die Energie, die der Reinigungsdüse (200) von der Batterie (175) zugeführt wird, zu übertragen; und
ein Verbindungsmodul (600), das zum Aufladen der Batterie (175) mit einer externen Stromversorgungseinrichtung (80) verbunden wird,
wobei das Verbindungsmodul (600) mit der Stromversorgungsleitung (500) elektrisch verbunden ist und derart vorgesehen ist, dass Ladeenergie, die von der externen Stromversorgungseinrichtung (80) zugeführt wird, durch die Stromversorgungsleitung (500) zur Batterie (175) übertragen wird,
**dadurch gekennzeichnet, dass**
die Stromversorgungsleitung (500) eine Schaltungsleitung (510), die in einer Y-Form verzweigt ist, enthält, wobei sie eine erste Zweigleitung (510a), die mit der Batterie (175) verbunden ist und sowohl zum Aufladen als auch zum Entladen der Batterie (175) verwendet wird, eine zweite Zweigleitung (510b), die mit der Reinigungsdüse (200) verbunden ist, und eine dritte Zweigleitung (510c), die mit dem Verbindungsmodul (600) verbunden ist, aufweist.

2. Reinigungsvorrichtung (10) nach Anspruch 1, wobei die verzweigte Schaltungsleitung (510) an einem Punkt angeordnet ist, der mit dem Verbindungsmodul (600) verbunden ist, und in zwei Richtungen verzweigt ist, wobei ein Ende der Reinigungsdüse (200) zugewandt ist und das andere Ende dem Hauptkörper (100) zugewandt ist.

3. Reinigungsvorrichtung (10) nach Anspruch 1, wobei das Verbindungsmodul (600) auf der Reinigungsdüse (200) und/oder dem Verlängerungsrohr (400) und/oder dem Hauptkörper (100) installiert ist.

4. Reinigungsvorrichtung (10) nach Anspruch 1, die ferner Folgendes umfasst:
eine Schaltkomponente (193), die zwischen der Batterie (175) und dem Verbindungsmodul (600) angeordnet ist, um einen Ein/Aus-Vorgang durchzuführen; und
eine Steuereinheit (195), die konfiguriert ist, durch die Schaltkomponente (193) Aufladen oder Entladen der Batterie (175) zu steuern.

5. Reinigungsvorrichtung (10) nach Anspruch 4, wobei die Steuereinheit (195) die Batterie (175) auflädt, indem die Schaltkomponente (193) eingeschaltet wird, wenn das Verbindungsmodul (600) und die externe Stromversorgungseinrichtung (80) verbunden sind.

6. Reinigungsvorrichtung (10) nach Anspruch 4, wobei die Steuereinheit (195) die Batterie (175) entlädt, indem die Schaltkomponente (193) eingeschaltet wird, wenn detektiert wird, dass ein Benutzerbefehl zum Antreiben der Reinigungsdüse (200) durch die Bedienungskomponente (160) eingegeben wird.

7. Reinigungsvorrichtung (10) nach Anspruch 1, wobei das Verbindungsmodul (600) Folgendes enthält:
einen Verbindungsabschnitt (610) für einen externen Anschluss, der nach außen freiliegt und mit der externen Stromversorgungseinrichtung (80) elektrisch verbunden wird; und
einen Stromversorgungsleitungs-Verbindungsabschnitt (630), der mit der Stromversorgungsleitung (500) elektrisch verbunden ist, und
wobei der Stromversorgungsleitungs-Verbindungsabschnitt (630) Folgendes enthält:
einen ersten Verbindungsabschnitt (631) und einen zweiten Verbindungsabschnitt (632), die abhängig davon, ob die externe Stromversorgungseinrichtung (80) verbunden ist, elektrisch geschlossen oder geöffnet sind; und
einen dritten Verbindungsabschnitt (633), der mit einer Seite des positiven Elektrodenanschlusses verbunden ist, wenn die externe Stromversorgungseinrichtung (80) verbunden ist.

8. Reinigungsvorrichtung (10) nach Anspruch 7, wobei die verzweigte Schaltungsleitung (510) an einem Punkt angeordnet ist, der mit dem dritten Verbindungsabschnitt (633) verbunden ist, und in zwei Richtungen verzweigt ist, wobei ein Ende der Reinigungsdüse (200) zugewandt ist und das andere Ende dem Hauptkörper (100) zugewandt ist.

9. Reinigungsvorrichtung (10) nach Anspruch 7, wobei dann, wenn das Verbindungsmodul (600) mit der externen Stromversorgungseinrichtung (80) verbunden ist, der erste Verbindungsabschnitt (631) und der zweite Verbindungsabschnitt (632) elektrisch geöffnet sind und die Batterie (175) aufgeladen wird.

10. Reinigungsvorrichtung (10) nach Anspruch 7, wobei in einem Zustand, in dem das Verbindungsmodul (600) nicht mit der externen Stromversorgungseinrichtung (80) verbunden ist, der erste Verbindungsabschnitt (631) und der zweite Verbindungsabschnitt (632) elektrisch geschlossen sind und dann, wenn in dem geschlossenen Zustand ein Benutzerbefehl zum Antreiben der Reinigungsdüse (200) durch die Bedienungskomponente (160) eingegeben wird, die Batterie (175) entladen wird.

11. Reinigungsvorrichtung (10) nach Anspruch 1,
wobei die Stromversorgungsleitung (500) konfiguriert ist zum:
Aufweisen eines Ladestromwegs von der externen Stromversorgungseinrichtung (80) zur Batterie (175), der darauf gebildet ist, wenn sie mit der externen Stromversorgungseinrichtung (80) elektrisch verbunden ist; und
Aufweisen eines Entladestromwegs von der Batterie (175) zur Reinigungsdüse (200), der darauf gebildet ist, abhängig davon, ob der Benutzerbefehl von der Bedienungskomponente (160) eingegeben wird, wenn sie von der externen Stromversorgungseinrichtung (80) getrennt ist.

## Revendications

1. Appareil de nettoyage (10) comportant :
un corps principal (100) dans lequel une partie de manipulation (160) configurée pour recevoir une commande d'un utilisateur et une batterie (175) configurée pour fournir de l'énergie, sont disposées ;
un suceur de nettoyage (200) raccordé au corps principal (100) et placé sur une surface de nettoyage cible ;
un tube prolongateur (400) raccordé au suceur de nettoyage (200) de manière détachable et ayant une extrémité raccordée au suceur de nettoyage (200) et l'autre extrémité raccordée au corps principal (100) ;
une ligne d'alimentation (500), dans lequel au moins une portion de ladite ligne d'alimentation (500) est installée sur le tube prolongateur (400), la ligne d'alimentation (500) étant configurée pour transmettre l'énergie fournie à partir de la batterie (175) au suceur de nettoyage (200) ; et
un module de connexion (600) connecté à un dispositif d'alimentation externe (80) pour charger la batterie (175),
dans lequel le module de connexion (600) est électriquement connecté à la ligne d'alimentation (500) et agencé de sorte que l'énergie de charge fournie à partir du dispositif d'alimentation externe (80) est transmise à la batterie (175) via la ligne d'alimentation (500),
**caractérisé en ce que**
la ligne d'alimentation (500) inclut une ligne de circuit (510) bifurquant en forme de Y ayant une première ligne de bifurcation (510a) connectée à la batterie (175) et utilisée à la fois pour charger et décharger la batterie (175), une deuxième ligne de bifurcation (510b) connectée au suceur de nettoyage (200) et une troisième ligne de bifurcation (510c) connectée au module de connexion (600).

2. Appareil de nettoyage (10) selon la revendication 1, dans lequel la ligne de circuit de bifurcation (510) est disposée à un point connecté au module de connexion (600) et bifurquant dans deux directions avec une extrémité dirigée vers le suceur de nettoyage (200) et l'autre extrémité dirigée vers le corps principal (100).

3. Appareil de nettoyage (10) selon la revendication 1, dans lequel le module de connexion (600) est installé sur au moins un élément parmi le suceur de nettoyage (200), le tube prolongateur (400) et le corps principal (100).

4. Appareil de nettoyage (10) selon la revendication 1, comportant en outre :
une partie de commutation (193) disposée entre la batterie (175) et le module de connexion (600) pour effectuer une opération de mise en marche/arrêt ; et
une commande (195) configurée pour commander une charge ou une décharge de la batterie (175) via la partie de commutation (193).

5. Appareil de nettoyage (10) selon la revendication 4, dans lequel la commande (195) charge la batterie (175) en mettant la partie de commutation (193) à l'état passant lorsque le module de connexion (600) et le dispositif d'alimentation externe (80) sont connectés.

6. Appareil de nettoyage (10) selon la revendication 4, dans lequel la commande (195) décharge la batterie (175) en mettant la partie de commutation (193) à l'état passant lors de la détection qu'une commande d'utilisateur destinée à commander le suceur de nettoyage (200) est entrée via la partie de manipulation (160).

7. Appareil de nettoyage (10) selon la revendication 1, dans lequel le module de connexion (600) inclut :
une portion de connexion de borne externe (610) exposée à un extérieur et électriquement connectée au dispositif d'alimentation externe (80) ; et
une portion de connexion de ligne d'alimentation (630) électriquement connectée à la ligne d'alimentation (500), et
la portion de connexion de ligne d'alimentation (630) inclut :
une première portion de connexion (631) et une deuxième portion de connexion (632) qui sont électriquement fermées ou ouvertes selon si le dispositif d'alimentation externe (80) est connecté ; et
une troisième partie de connexion (633) connectée à un côté de borne d'électrode positive lorsque le dispositif d'alimentation externe (80) est connecté.

8. Appareil de nettoyage (10) selon la revendication 7, dans lequel la ligne de circuit de bifurcation (510) est disposée à un point connecté à la troisième portion de connexion (633) et bifurquant dans deux directions avec une extrémité dirigée vers le suceur de nettoyage (200) et l'autre extrémité dirigée vers le corps principal (100).

9. Appareil de nettoyage (10) selon la revendication 7, dans lequel, lorsque le module de connexion (600) est connecté au dispositif d'alimentation externe (80), la première portion de connexion (631) et la deuxième portion de connexion (632) sont électriquement ouvertes, et la batterie (175) est chargée.

10. Appareil de nettoyage (10) selon la revendication 7, dans lequel, dans un état dans lequel le module de connexion (600) n'est pas connecté au dispositif d'alimentation externe (80), la première portion de connexion (631) et la deuxième portion de connexion (632) sont électriquement fermées, et lorsqu'une commande d'utilisateur destinée à commander le suceur de nettoyage (200) est entrée via la partie de manipulation (160) dans l'état fermé, la batterie (175) est déchargée.

11. Appareil de nettoyage (10) selon la revendication 1,
dans lequel la ligne d'alimentation (500) est configurée pour :
avoir un trajet de courant de charge allant du dispositif d'alimentation externe (80) jusqu'à la batterie (175) formée sur celle-ci lorsqu'elle est électriquement connectée au dispositif d'alimentation externe (80) ; et
avoir un trajet de courant de décharge allant de la batterie (175) jusqu'au suceur de nettoyage (200) formé sur celle-ci selon si la commande d'utilisateur est entrée depuis la partie de manipulation (160) lorsqu'elle est déconnectée du dispositif d'alimentation externe (80).
